# EUROPÄISCHE PATENTSCHRIFT

(11) **EP 3 924 632 B1**
(45) Veröffentlichungstag und Bekanntmachung des Hinweises auf die Patenterteilung: **27.11.2024**
(21) Anmeldenummer: 20710765.7
(22) Anmeldetag: 05.02.2020
(51) Int. Cl.: F16D 13/68, F16D 13/72

(54) **DOPPELKUPPLUNGSGETRIEBE FÜR EIN ELEKTROFAHRZEUG UND ANTRIEBSEINHEIT FÜR EIN ELEKTROFAHRZEUG**
DUAL CLUTCH TRANSMISSION FOR AN ELECTRIC VEHICLE AND DRIVE UNIT FOR AN ELECTRIC VEHICLE
TRANSMISSION À DOUBLE EMBRAYAGE POUR UN VÉHICULE ÉLECTRIQUE ET UNITÉ D'ENTRAÎNEMENT POUR UN VÉHICULE ÉLECTRIQUE

(30) Priorität: 14.02.2019 DE 102019201980
(43) Veröffentlichungstag der Anmeldung: 22.12.2021
(73) Patentinhaber: Robert Bosch GmbH, 70442 Stuttgart (DE)
(72) Erfinder: KRAEUTER, Janek, 71636 Ludwigsburg (DE)
(86) Internationale Anmeldenummer: PCT/EP2020/052872
(87) Internationale Veröffentlichungsnummer: WO 2020/164996

(56) Entgegenhaltungen:
- WO-A1-2018/024966
- WO-A1-2018/024966
- CN-A- 105 465 215
- DE-A1- 102007 007 468
- DE-A1- 102008 012 894
- DE-A1- 102008 012 894
- DE-A1- 102014 220 909
- DE-A1- 102014 220 909
- DE-A1- 102016 216 322
- DE-A1- 102016 216 322
- DE-A1- 102018 116 589
- DE-A1- 102018 116 589
- US-A1- 2013 306 424
- US-A1- 2013 306 424

## Beschreibung

Die Erfindung betrifft ein Doppelkupplungsgetriebe für ein Elektrofahrzeug, welches eine Eingangswelle, eine erste Teilkupplung, mittels welcher die Eingangswelle mit einer ersten Abtriebswelle kuppelbar ist, und eine zweite Teilkupplung, mittels welcher die Eingangswelle mit einer zweiten Abtriebswelle kuppelbar ist, umfasst. Die Erfindung betrifft auch eine Antriebseinheit für ein Elektrofahrzeug, welche ein erfindungsgemäßes Doppelkupplungsgetriebe umfasst.

### Stand der Technik

Doppelkupplungsgetriebe für Kraftfahrzeuge umfassen zwei Teilgetriebe, wobei ein vollautomatischer Gangwechsel ohne Zugkraftunterbrechung möglich ist. Dabei ist jedem der Teilgetriebe jeweils eine Teilkupplung zugeordnet, mittels welcher eine Abtriebswelle des jeweiligen Teilgetriebes mit einer Eingangswelle kuppelbar ist. Die Abtriebswellen der Teilgetriebe sind über weitere Getriebestufen mit einer gemeinsamen Ausgangswelle verbunden. Somit sind verschiedene Drehzahlübersetzungen zwischen der Eingangswelle und der Ausgangswelle wählbar.

Das Dokument DE 102017203542 A1 offenbart ein Getriebe für ein Kraftfahrzeug. Das Getriebe weist eine erste Kupplung und eine zweite Kupplung auf, welche unabhängig voneinander mit einem Kupplungsträger koppelbar sind. Die erste Kupplung umfasst eine erste Betätigungseinheit mit einem ersten Ausrücklager. Die zweite Kupplung umfasst eine zweite Betätigungseinheit mit einem zweiten Ausrücklager.

Das Dokument DE 102016124812 A1 offenbart eine Reibkupplungseinrichtung für ein Kraftfahrzeug, welche als Doppelkupplung ausgeführt ist. Die Doppelkupplung umfasst eine Betätigungseinrichtung, die ein erstes

Ausrücklager und ein zweites Ausrücklager aufweist. Dabei ist das erste Ausrücklager einer ersten Teilkupplung zugeordnet, und das zweite Ausrücklager ist einer zweiten Teilkupplung zugeordnet.

Das Dokument DE 102017102733 A1 offenbart eine Doppelkupplung für ein Kraftfahrzeug, welche eine erste Teilkupplung und eine zweite Teilkupplung umfasst. Zur Betätigung der Kupplung ist ein Hebelelement vorgesehen. Durch eine Schwenkbewegung des Hebelelements wird über einen Zuganker eine Anpressplatte axial verlagert.

Das Dokument DE 102011102329 A1 offenbart eine Doppelkupplung für ein Kraftfahrzeug, welche zwei Reibungskupplungen umfasst. Einer der beiden Reibungskupplungen ist eine Hebelfeder zugeordnet. Die Hebelfeder beaufschlagt dabei einen Zuganker, der daraufhin eine Anpressplatte axial verschiebt.

Das Dokument DE 102016216322 A1 offenbart eine Kupplungseinrichtung mit zwei Lamellenträgern. Die Kupplungseinrichtung weist eine Eingangswelle, eine erste Teilkupplung, mittels welcher die Eingangswelle mit einer ersten Abtriebswelle kuppelbar ist, und eine zweite Teilkupplung auf, mittels welcher die Eingangswelle mit einer zweiten Abtriebswelle kuppelbar ist, wobei die zweite Abtriebswelle als Hohlwelle ausgeführt ist einen sich in Radialrichtung erstreckenden Flanschabschnitt aufweist und ein mit der zweiten Abtriebswelle verbundener Mitnehmer den Flanschabschnitt durchgreift.

Ein weiteres Beispiel für eine Doppelkupplung nach dem Oberbegriff des Anspruchs 1 findet sich in CN 105 465 215 B.

### Offenbarung der Erfindung

Es wird ein Doppelkupplungsgetriebe für ein Elektrofahrzeug vorgeschlagen. Das erfindungsgemäße Doppelkupplungsgetriebe ist in Anspruch 1 offenbart und umfasst eine von einem Elektromotor antreibbare Eingangswelle, eine erste Abtriebswelle und eine zweite Abtriebswelle. Das Doppelkupplungsgetriebe umfasst ferner eine erste Teilkupplung, mittels welcher die Eingangswelle mit der ersten Abtriebswelle kuppelbar ist, und eine zweite Teilkupplung, mittels welcher die Eingangswelle mit der zweiten Abtriebswelle kuppelbar ist.

Dabei ist die zweite Abtriebswelle als Hohlwelle ausgeführt. Erfindungsgemäß umgibt die zweite Abtriebswelle dabei die erste Abtriebswelle koaxial. Die erste Abtriebswelle und die zweite Abtriebswelle rotieren um eine Drehachse. Eine Richtung parallel zu der Drehachse wird im Folgenden als Axialrichtung bezeichnet. Eine Richtung rechtwinklig zu der Drehachse wird im Folgenden als Radialrichtung bezeichnet.

Die zweite Abtriebswelle weist einen sich in Radialrichtung erstreckenden Flanschabschnitt auf. In einem radial äußeren Bereich des Flanschabschnitts der zweiten Abtriebswelle ist die zweite Teilkupplung angebracht. Wenn eine Anpresskraft in Axialrichtung, beispielsweise über eine Druckplatte, auf die zweite Teilkupplung wirkt und zeitgleich die erste Teilkupplung öffnet, so schließt die zweite Teilkupplung und die Eingangswelle wird mit der zweiten Abtriebswelle gekuppelt.

Die erste Teilkupplung ist von einer ersten Betätigungseinheit betätigbar, welche einen Mitnehmer aufweist. Der Mitnehmer der ersten Betätigungseinheit durchgreift den Flanschabschnitt der zweiten Abtriebswelle in Axialrichtung. Dabei ist der Mitnehmer der ersten Betätigungseinheit mit der zweiten Abtriebswelle drehfest verbunden.

Erfindungsgemäß weist die erste Betätigungseinheit ein erstes Ausrücklager und ein zweites Ausrücklager auf. Der Mitnehmer der ersten Betätigungseinheit ist über das erste Ausrücklager in Axialrichtung ansteuerbar, und die erste Teilkupplung ist über das zweite Ausrücklager von dem Mitnehmer, beispielsweise über eine Druckplatte, in Axialrichtung ansteuerbar.

Wenn eine Anpresskraft in Axialrichtung auf das erste Ausrücklager wirkt, so wird die Anpresskraft von dem ersten Ausrücklager über den Mitnehmer zu dem zweiten Ausrücklager übertragen. Das zweite Ausrücklager überträgt die Anpresskraft, beispielsweise über eine Druckplatte, auf die erste Teilkupplung, welche daraufhin schließt. Dadurch wird die Eingangswelle wird mit der ersten Abtriebswelle gekuppelt. Die Anpresskraft wird dabei in Axialrichtung durch den Flanschabschnitt der zweiten Abtriebswelle hindurch übertragen.

Vorzugsweise ist der Mitnehmer der ersten Betätigungseinheit dabei relativ zu dem Flanschabschnitt der zweiten Abtriebswelle in Axialrichtung verschiebbar. Wenn also eine Anpresskraft in Axialrichtung auf das erste Ausrücklager wirkt, so wird die Anpresskraft von dem ersten Ausrücklager über den Mitnehmer übertragen, welcher sich daraufhin in Axialrichtung bewegt und dabei die Anpresskraft zu dem zweiten Ausrücklager überträgt.

Gemäß einer bevorzugten Ausgestaltung der Erfindung sind die Teilkupplungen des Doppelkupplungsgetriebes derart angeordnet, dass die zweite Teilkupplung die erste Teilkupplung koaxial umgibt. Dadurch wird ein für die Teilkupplungen erforderlicher Bauraum vorteilhaft verringert.

Gemäß einer vorteilhaften Ausgestaltung der Erfindung ist die erste Teilkupplung als Lamellenkupplung ausgeführt, und/oder die zweite Teilkupplung ist als Lamellenkupplung ausgeführt. Die Teilkupplungen weisen vorzugsweise Lamellenpakete auf, welche durch eine in Axialrichtung wirkende Anpresskraft betätigt werden können.

Vorzugsweise weist die erste Betätigungseinheit eine erste Druckplatte zur Betätigung der ersten Teilkupplung auf. Die erste Druckplatte ist dabei von dem zweiten Ausrücklager ansteuerbar. Die zweite Betätigungseinheit weist vorzugsweise eine zweite Druckplatte zur Betätigung der zweiten Teilkupplung auf.

Gemäß einer vorteilhaften Ausgestaltung der Erfindung ist die erste Druckplatte der ersten Betätigungseinheit mit der ersten Abtriebswelle drehfest verbunden. Vorzugsweise ist die erste Druckplatte dabei relativ zu der ersten Abtriebswelle in Axialrichtung verschiebbar.

Gemäß einer anderen vorteilhaften Ausgestaltung der Erfindung ist die erste Druckplatte der ersten Betätigungseinheit relativ zu der ersten Abtriebswelle drehbar gelagert. Vorzugsweise ist die erste Druckplatte dabei relativ zu der ersten Abtriebswelle in Axialrichtung verschiebbar.

Vorzugsweise ist die erste Abtriebswelle mit einem ersten Ritzel drehfest verbunden. Das erste Ritzel kämmt dabei mit einem ersten Zahnrad. Vorzugsweise ist auch die zweite Abtriebswelle mit einem zweiten Ritzel drehfest verbunden. Das zweite Ritzel kämmt mit einem zweiten Zahnrad. Das erste Ritzel und das erste Zahnrad bilden dabei eine erste Gangstufe. Das zweite Ritzel und das zweite Zahnrad bilden eine zweite Gangstufe.

Bevorzugt sind das erste Zahnrad und das zweite Zahnrad mit einer gemeinsamen Ausgangswelle drehfest verbunden. Die Ausgangswelle ist dabei auch mit einem dritten Ritzel drehfest verbindbar. Das dritte Ritzel kämmt beispielsweise mit einem dritten Zahnrad, welches zum Antrieb eines Differentialgetriebes dient.

Es wird auch eine Antriebseinheit für ein Elektrofahrzeug vorgeschlagen. Die Antriebseinheit umfasst dabei ein erfindungsgemäßes Doppelkupplungsgetriebe und einen Elektromotor zum Antrieb der Eingangswelle des erfindungsgemäßen Doppelkupplungsgetriebes. Vorteilhaft umfasst die erfindungsgemäße Antriebseinheit auch ein Differentialgetriebe, mittels welchem zwei Antriebsräder des Elektrofahrzeugs antreibbar sind.

### Vorteile der Erfindung

Ein erfindungsgemäßes Doppelkupplungsgetriebe ist, insbesondere aufgrund der koaxialen Anordnung der beiden Teilgetriebe, sehr bauraumsparend ausgebildet. Die Ansteuerung der ersten Teilkupplung, welche vorzugsweise radial innen liegt und von der zweiten Teilkupplung koaxial umgeben ist, ist durch den sich in Radialrichtung erstreckenden Flanschabschnitt der zweiten Abtriebswelle hindurch möglich. Die Ausgestaltung der ersten Betätigungseinheit ermöglicht eine Betätigung der ersten Teilkupplung durch den besagten Flanschabschnitt der zweiten Abtriebswelle hindurch, obwohl die zweite Abtriebswelle im Betrieb eine andere Drehzahl aufweist als die erste Abtriebswelle. Die Zugänglichkeit zu einem Lamellenpaket der ersten Teilkupplung ist somit vorteilhaft erhöht. Dabei kann die erste Betätigungseinheit auf einer der Eingangswelle abgewandten Seite der beiden Teilkupplungen angeordnet werden. Damit ist eine flexible Anpassung des Doppelkupplungsgetriebes an den in einem Elektrofahrzeug zur Verfügung stehenden Bauraum ermöglicht. Ferner ist ein erfindungsgemäßes Doppelkupplungsgetriebe verhältnismäßig kostengünstig zu fertigen. Ein erfindungsgemäßes Doppelkupplungsgetriebe kann anstelle von Lamellenkupplungen auch anderen Teilkupplungen, beispielsweise Scheibenkupplungen, umfassen. Auch eine erfindungsgemäße Antriebseinheit für ein Elektrofahrzeug ist verhältnismäßig bauraumsparend ausgebildet und kostengünstig zu fertigen.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Antriebseinheit für ein Elektrofahrzeug,
- Figur 2: eine Schnittdarstellung eines Doppelkupplungsgetriebes der Antriebseinheit aus Figur 1 und
- Figur 3: eine Schnittdarstellung einer ersten Betätigungseinheit des Doppelkupplungsgetriebes aus Figur 2.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

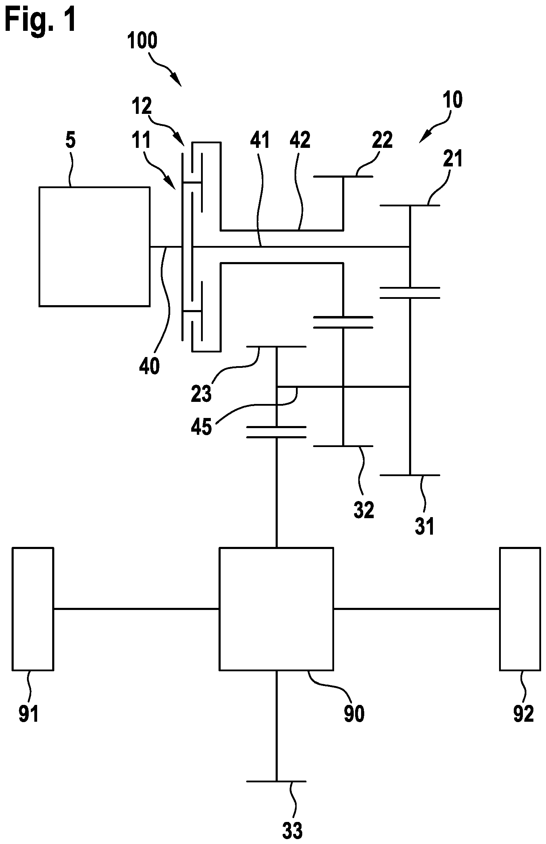

Figur 1 zeigt eine schematische Darstellung einer Antriebseinheit 100 für ein Elektrofahrzeug. Die Antriebseinheit 100 umfasst ein Doppelkupplungsgetriebe 10 und einen Elektromotor 5. Der Elektromotor 5 treibt eine Eingangswelle 40 des Doppelkupplungsgetriebes 10 an. Die erfindungsgemäße Antriebseinheit 100 umfasst ferner ein Differentialgetriebe 90. Das Differentialgetriebe 90 treibt über jeweils einen Achsantrieb ein erstes Antriebsrad 91 und ein zweites Antriebsrad 92 des Elektrofahrzeugs an.

Das Doppelkupplungsgetriebe 10 umfasst, wie bereits erwähnt, die Eingangswelle 40, die von dem Elektromotor 5 angetrieben wird. Ferner umfasst das Doppelkupplungsgetriebe 10 eine erste Abtriebswelle 41 und eine zweite Abtriebswelle 42. Das Doppelkupplungsgetriebe 10 umfasst auch eine erste Teilkupplung 11 und eine zweite Teilkupplung 12. Mittels der ersten Teilkupplung 11 ist die Eingangswelle 40 mit der ersten Abtriebswelle 41 kuppelbar. Mittels der zweiten Teilkupplung 12 ist die Eingangswelle 40 mit der zweiten Abtriebswelle 42 kuppelbar.

Das Doppelkupplungsgetriebe 10 umfasst auch ein erstes Ritzel 21 und ein zweites Ritzel 22. Die erste Abtriebswelle 41 ist mit dem ersten Ritzel 21 drehfest verbunden. Die zweite Abtriebswelle 42 ist mit dem zweiten Ritzel 22 drehfest verbunden. Das Doppelkupplungsgetriebe 10 umfasst ferner ein erstes Zahnrad 31, ein zweites Zahnrad 32 und eine Ausgangswelle 45. Das erste Zahnrad 31 und das zweite Zahnrad 32 sind dabei mit der gemeinsamen Ausgangswelle 45 drehfest verbunden.

Das erste Ritzel 21 kämmt mit dem ersten Zahnrad 31. Das erste Ritzel 21 und das erste Zahnrad 31 bilden eine erste Gangstufe. Das zweite Ritzel 22 kämmt mit dem zweiten Zahnrad 32. Das zweite Ritzel 22 und das zweite Zahnrad 32 bilden eine zweite Gangstufe. Die erste Gangstufe und die zweite Gangstufe weisen dabei unterschiedliche Übersetzungsverhältnisse auf. Das Doppelkupplungsgetriebe 10 gestattet somit zwei unterschiedliche Übersetzungsverhältnisse zwischen der Drehzahl der Eingangswelle 40 und der Drehzahl der Ausgangswelle 45.

Die Ausgangswelle 45 des Doppelkupplungsgetriebes 10 ist auch mit einem dritten Ritzel 23 drehfest verbunden. Das dritte Ritzel 23 kämmt mit einem dritten Zahnrad 33. Das dritte Zahnrad 33 dient zum Antrieb des Differentialgetriebes 90 der Antriebseinheit 100. Das Differentialgetriebe 90 ist somit von dem Elektromotor 5 über das Doppelkupplungsgetriebe 10 mit zwei unterschiedlichen Übersetzungsverhältnissen antreibbar.

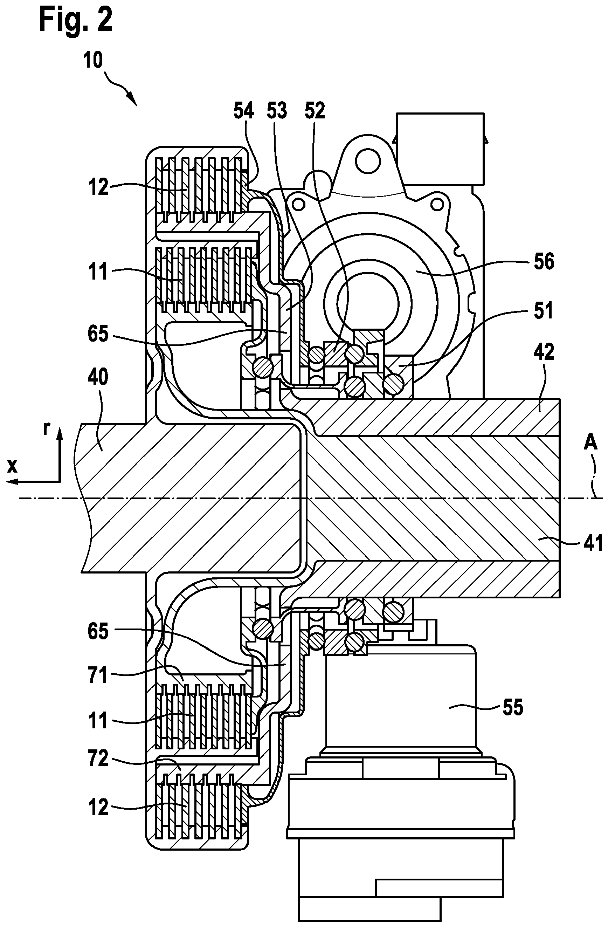

Figur 2 zeigt eine Schnittdarstellung eines Teils des Doppelkupplungsgetriebes 10 der in Figur 1 dargestellten Antriebseinheit 100. Dabei sind die beiden Ritzel 21, 22, die beiden Zahnräder 31, 32 sowie die Ausgangswelle 45 nicht dargestellt. Die zweite Abtriebswelle 42 ist als Hohlwelle ausgebildet. Die zweite Abtriebswelle 42 umgibt die erste Abtriebswelle 41 koaxial, welche als Vollwelle ausgebildet ist.

Die erste Abtriebswelle 41 und die zweite Abtriebswelle 42 rotieren somit um die gleiche Drehachse A. Vorliegend rotiert auch die Eingangswelle 40 um die Drehachse A. Eine Richtung parallel zu der Drehachse A wird im Folgenden als Axialrichtung x bezeichnet. Eine Richtung rechtwinklig zu der Drehachse A wird im Folgenden als Radialrichtung r bezeichnet.

Die erste Teilkupplung 11 und die zweite Teilkupplung 12 sind jeweils als Lamellenkupplung ausgeführt. Die erste Teilkupplung 11 und die zweite Teilkupplung 12 weisen jeweils ein Lamellenpaket auf, welches durch eine in Axialrichtung x wirkende Anpresskraft betätigt werden kann. Die zweite Teilkupplung 12 umgibt die erste Teilkupplung 11 koaxial.

Die erste Teilkupplung 11 weist einen ersten Lamellenträger 71 auf, auf welchem Lamellen des zugehörigen Lamellenpakets angeordnet sind. Auf einem entsprechenden Träger der Eingangswelle 40 sind dazu korrespondierende Lamellen des zugehörigen Lamellenpakets angeordnet. Zur Betätigung der ersten Teilkupplung 11 umfasst das Doppelkupplungsgetriebes 10 eine erste Betätigungseinheit 51.

Die zweite Teilkupplung 12 weist einen zweite Lamellenträger 72 auf, auf welchem Lamellen des zugehörigen Lamellenpakets angeordnet sind. Auf einem entsprechenden Träger der Eingangswelle 40 sind dazu korrespondierende Lamellen des zugehörigen Lamellenpakets angeordnet. Zur Betätigung der zweiten Teilkupplung 12 umfasst das Doppelkupplungsgetriebes 10 eine zweite Betätigungseinheit 52.

Das Doppelkupplungsgetriebe 10 umfasst ferner eine erste Schalteinheit 55 zum Antrieb der ersten Betätigungseinheit 51. Die erste Schalteinheit 55 weist dazu vorliegend einen Getriebemotor auf. Das Doppelkupplungsgetriebe 10 umfasst auch eine zweite Schalteinheit 56 zum Antrieb der zweiten Betätigungseinheit 52. Die zweite Schalteinheit 56 weist dazu ebenfalls vorliegend einen Getriebemotor auf.

Die zweite Abtriebswelle 42 weist einen Flanschabschnitt 65 auf, der sich in Radialrichtung r erstreckt. Der zweite Lamellenträger 72 ist mit dem Lamellenpaket in einem radial äußeren Bereich des Flanschabschnitts 65 angebracht. Somit ist die zweite Teilkupplung 12 in einem radial äußeren Bereich des Flanschabschnitts 65 angebracht.

Die erste Betätigungseinheit 51 weist eine erste Druckplatte 53 zur Betätigung der ersten Teilkupplung 11 auf. Wenn eine Anpresskraft in Axialrichtung x auf die erste Druckplatte 53 wirkt, so drückt die erste Druckplatte 53 das Lamellenpaket der ersten Teilkupplung 11 zusammen und die erste Teilkupplung 11 schließt. Dadurch wird die Eingangswelle 40 mit der ersten Abtriebswelle 41 gekuppelt.

Die zweite Betätigungseinheit 52 weist eine zweite Druckplatte 54 zur Betätigung der zweiten Teilkupplung 12 auf. Wenn eine Anpresskraft in Axialrichtung x auf die zweite Druckplatte 54 wirkt, so drückt die zweite Druckplatte 54 das Lamellenpaket der zweiten Teilkupplung 12 zusammen und die zweite Teilkupplung 12 schließt. Dadurch wird die Eingangswelle 40 mit der zweiten Abtriebswelle 42 gekuppelt.

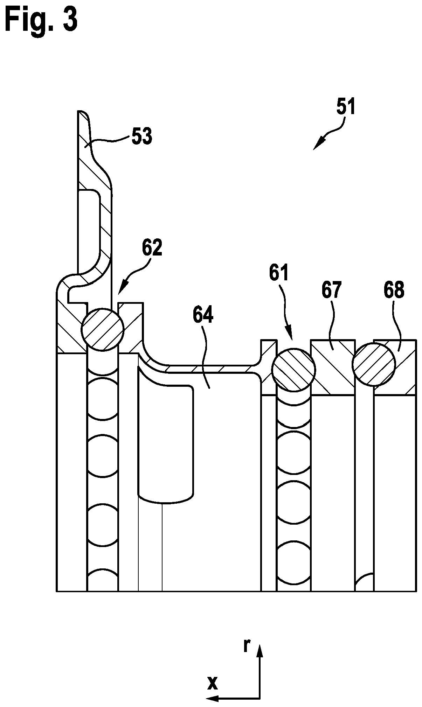

Figur 3 zeigt eine Schnittdarstellung der ersten Betätigungseinheit 51 zur Betätigung der ersten Teilkupplung 11 des Doppelkupplungsgetriebes 10 aus Figur 2. Die erste Betätigungseinheit 51 ist, wie bereits erwähnt, von einer ersten Schalteinheit 55 antreibbar, welche hier nicht dargestellt ist.

Die erste Betätigungseinheit 51 weist einen Mitnehmer 64 auf. Der Mitnehmer 64 der ersten Betätigungseinheit 51 durchgreift den hier nicht dargestellten Flanschabschnitt 65 der zweiten Abtriebswelle 42 in Axialrichtung x. Der Mitnehmer 64 der ersten Betätigungseinheit 51 ist dabei mit der zweiten Abtriebswelle 42 drehfest verbunden. Der Mitnehmer 64 der ersten Betätigungseinheit 51 ist jedoch relativ zu dem Flanschabschnitt 65 der zweiten Abtriebswelle 42 in Axialrichtung x verschiebbar.

Die erste Betätigungseinheit 51 weist ferner ein erstes Ausrücklager 61 und ein zweites Ausrücklager 62 auf. Der Mitnehmer 64 ist dabei in Axialrichtung x zwischen dem ersten Ausrücklager 61 und dem zweiten Ausrücklager 62 angeordnet. Das zweite Ausrücklager 62 ist in Axialrichtung x zwischen dem Mitnehmer 64 und der ersten Druckplatte 53 angeordnet.

Die erste Betätigungseinheit 51 weist ferner einen Druckring 67 und eine Spreizscheibe 68 auf. Das erste Ausrücklager 61 ist in Axialrichtung x zwischen dem Mitnehmer 64 und dem Druckring 67 angeordnet. Die Spreizscheibe 68 ist in Axialrichtung x auf einer dem ersten Ausrücklager 61 abgewandten Seite des Druckrings 67 angeordnet.

Das erste Ausrücklager 61 ist vorliegend als Kugellager ausgeführt. Das erste Ausrücklager 61 gestattet eine Übertragung einer Anpresskraft in Axialrichtung x von dem Druckring 67 auf den Mitnehmer 64. Gleichzeitig gestattet das erste Ausrücklager 61 eine Drehung des Mitnehmers 64 relativ zu dem Druckring 67.

Das zweite Ausrücklager 62 ist vorliegend als Kugellager ausgeführt. Das zweite Ausrücklager 62 gestattet eine Übertragung einer Anpresskraft in Axialrichtung x von dem Mitnehmer 64 auf die erste Druckplatte 53. Gleichzeitig gestattet das zweite Ausrücklager 62 eine Drehung der ersten Druckplatte 53 relativ zu dem Mitnehmer 64.

Um die erste Teilkupplung 11 des Doppelkupplungsgetriebes 10 zu schließen wird die erste Schalteinheit 55 angesteuert. Die erste Schalteinheit 55 beaufschlagt daraufhin die Spreizscheibe 68 der ersten Betätigungseinheit 51 mit einer Anpresskraft in Axialrichtung x. Die Spreizscheibe 68 wird dadurch in Axialrichtung x verschoben und überträgt die Anpresskraft auf den Druckring 67. Dadurch wird der Druckring 67 in Axialrichtung x verschoben und überträgt die Anpresskraft auf das erste Ausrücklager 61.

Das erste Ausrücklager 61 wird dadurch in Axialrichtung x verschoben und überträgt die Anpresskraft auf den Mitnehmer 64. Der Mitnehmer 64 wird dadurch in Axialrichtung x relativ zu dem Flanschabschnitt 65 der zweiten Abtriebswelle 42 verschoben und überträgt die Anpresskraft auf das zweite Ausrücklager 62. Der Mitnehmer 64 rotiert dabei mit der Drehzahl der zweiten Abtriebswelle 42. Die Anpresskraft wird also in Axialrichtung x durch den Flanschabschnitt 65 der zweiten Abtriebswelle 42 hindurch übertragen.

Das zweite Ausrücklager 62 wird dadurch in Axialrichtung x verschoben und überträgt die Anpresskraft auf die erste Druckplatte 53. Die erste Druckplatte 53 wird dadurch in Axialrichtung x verschoben und überträgt die Anpresskraft auf das Lamellenpaket der ersten Teilkupplung 11. Die erste Teilkupplung 11 schließt daraufhin. Dadurch wird die Eingangswelle 40 mit der ersten Abtriebswelle 41 gekuppelt. Danach rotiert die erste Druckplatte 53 mit der Drehzahl der der ersten Abtriebswelle 41.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Doppelkupplungsgetriebe (10) für ein Elektrofahrzeug, umfassend
eine Eingangswelle (40),
eine erste Teilkupplung (11), mittels welcher die Eingangswelle (40) mit einer ersten Abtriebswelle (41) kuppelbar ist, und
eine zweite Teilkupplung (12), mittels welcher die Eingangswelle (40) mit einer zweiten Abtriebswelle (42) kuppelbar ist, wobei die zweite Abtriebswelle (42) als Hohlwelle ausgeführt ist,
wobei die zweite Abtriebswelle (42) einen sich in Radialrichtung (r) erstreckenden Flanschabschnitt (65) aufweist, wobei die erste Teilkupplung (11) von einer ersten Betätigungseinheit (51) betätigbar ist, welche einen Mitnehmer (64) aufweist, der den Flanschabschnitt (65) in Axialrichtung (x) durchgreift und mit der zweiten Abtriebswelle (42) drehfest verbunden ist, und
die erste Teilkupplung (11) über ein Ausrücklager (62) von dem Mitnehmer (64) in Axialrichtung (x) ansteuerbar ist, wobei
die zweite Teilkupplung (12) die erste Teilkupplung (11) koaxial umgibt, wobei die erste Teilkupplung (11) als Lamellenkupplung ausgeführt ist und die zweite Teilkupplung (12) als Lamellenkupplung ausgeführt ist,
wobei die erste Teilkupplung (11) einen ersten Lamellenträger (71) aufweist, auf welchem Lamellen eines zugehörigen Lamellenpakets angeordnet sind und welcher mit der ersten Abtriebswelle (41) verbunden ist, und wobei auf einem entsprechenden Träger der Eingangswelle (40) dazu korrespondierende Lamellen des zugehörigen Lamellenpakets angeordnet sind, **dadurch gekennzeichnet, dass** der Mitnehmer (64) über ein erstes Ausrücklager (61) in Axialrichtung (x) ansteuerbar ist und die erste Teilkupplung (11) über ein zweites Ausrücklager (62) von dem Mitnehmer (64) in Axialrichtung (x) ansteuerbar ist und dass die auf dem ersten Lamellenträger (71) angeordneten Lamellen radial nach außen weisen und die auf dem entsprechenden Träger der Eingangswelle (40) angeordneten dazu korrespondierenden Lamellen radial nach innen weisen und die Verbindung zwischen der ersten Abtriebswelle (41) und dem ersten Lamellenträger (71) nicht von dem Mitnehmer (64) durchgriffen wird.

2. Doppelkupplungsgetriebe (10) nach Anspruch 1, **dadurch gekennzeichnet, dass**
der Mitnehmer (64) relativ zu dem Flanschabschnitt (65) in Axialrichtung (x) verschiebbar ist.

3. Doppelkupplungsgetriebe (10) nach einem der vorstehenden Ansprüche, **dadurch gekennzeichnet, dass**
die erste Betätigungseinheit (51) eine erste Druckplatte (53) zur Betätigung der ersten Teilkupplung (11) aufweist, welche von dem zweiten Ausrücklager (62) ansteuerbar ist.

4. Doppelkupplungsgetriebe (10) nach Anspruch 3, **dadurch gekennzeichnet, dass**
die erste Druckplatte (53) mit der ersten Abtriebswelle (41) drehfest verbunden ist.

5. Doppelkupplungsgetriebe (10) nach Anspruch 3, **dadurch gekennzeichnet, dass**
die erste Druckplatte (53) relativ zu der ersten Abtriebswelle (41) drehbar gelagert ist.

6. Doppelkupplungsgetriebe (10) nach einem der vorstehenden Ansprüche,
**dadurch gekennzeichnet, dass**
die erste Abtriebswelle (41) mit einem ersten Ritzel (21) drehfest verbunden ist, welches mit einem ersten Zahnrad (31) kämmt, und dass die zweite Abtriebswelle (42) mit einem zweiten Ritzel (22) drehfest verbunden ist, welches mit einem zweiten Zahnrad (32) kämmt.

7. Doppelkupplungsgetriebe (10) nach Anspruch 6, **dadurch gekennzeichnet, dass**
das erste Zahnrad (31) und das zweite Zahnrad (32) mit einer Ausgangswelle (45) drehfest verbunden sind, welche mit einem dritten Ritzel (23) drehfest verbindbar ist.

8. Antriebseinheit (100) für ein Elektrofahrzeug, umfassend
ein Doppelkupplungsgetriebe (10) nach einem der vorstehenden Ansprüche und einen Elektromotor (5) zum Antrieb der Eingangswelle (40) des Doppelkupplungsgetriebes (10).

## Claims

1. Dual-clutch transmission (10) for an electric vehicle, comprising an input shaft (40),
a first component clutch (11) by means of which the input shaft (40) is able to be coupled to a first drive-output shaft (41), and
a second component clutch (12) by means of which the input shaft (40) is able to be coupled to a second drive-output shaft (42), wherein
the second drive-output shaft (42) is in the form of a hollow shaft,
wherein the second drive-output shaft (42) has a flange portion (65) which extends in a radial direction (r), wherein
the first component clutch (11) is able to be actuated by a first actuating unit (51) having a driver (64), which driver engages through the flange portion (65) in an axial direction (x) and is connected rotationally conjointly to the second drive-output shaft (42), and
the first component clutch (11) is able to be activated by the driver (64) in the axial direction (x) via a release bearing (62), wherein
the second component clutch (12) coaxially surrounds the first component clutch (11),
wherein the first component clutch (11) is in the form of a multi-plate clutch and the second component clutch (12) is in the form of a multi-plate clutch, wherein the first component clutch (11) has a first plate carrier (71) on which plates of an associated set of plates are arranged and which is connected to the first drive-output shaft (41), and wherein a corresponding carrier of the input shaft (40) has corresponding plates of the associated set of plates arranged on it, **characterized in that** the driver (64) is able to be activated in the axial direction (x) via a first release bearing (61) and the first component clutch (11) is able to be activated by the driver (64) in the axial direction (x) via a second release bearing (62), and **in that** the plates arranged on the first plate carrier (71) are oriented radially outwards and the plates arranged on the corresponding carrier of the input shaft (40) corresponding thereto are oriented radially inwards, and the connection between the first drive-output shaft (41) and the first plate carrier (71) is not engaged through by the driver (64).

2. Dual-clutch transmission (10) according to Claim 1, **characterized in that** the driver (64) is displaceable in the axial direction (x) relative to the flange portion (65).

3. Dual-clutch transmission (10) according to one of the preceding claims, **characterized in that**
the first actuating unit (51) has a first pressure plate (53) for actuating the first component clutch (11), which is able to be activated by the second release bearing (62).

4. Dual-clutch transmission (10) according to Claim 3, **characterized in that** the first pressure plate (53) is connected rotationally conjointly to the first drive-output shaft (41).

5. Dual-clutch transmission (10) according to Claim 3, **characterized in that** the first pressure plate (53) is mounted so as to be rotatable relative to the first drive-output shaft (41).

6. Dual-clutch transmission (10) according to one of the preceding claims, **characterized in that**
the first drive-output shaft (41) is connected rotationally conjointly to a first pinion (21) which meshes with a first gearwheel (31), and **in that** the second drive-output shaft (42) is connected rotationally conjointly to a second pinion (22) which meshes with a second gearwheel (32).

7. Dual-clutch transmission (10) according to Claim 6, **characterized in that** the first gearwheel (31) and the second gearwheel (32) are connected rotationally conjointly to an output shaft (45) which is able to be connected rotationally conjointly to a third pinion (23).

8. Drive unit (100) for an electric vehicle, comprising
a dual-clutch transmission (10) according to one of the preceding claims and an electric motor (5) for driving the input shaft (40) of the dual-clutch transmission (10).

## Revendications

1. Boîte de vitesses à double embrayage (10) pour un véhicule électrique, comprenant un arbre d'entrée (40),
un premier embrayage partiel (11) au moyen duquel l'arbre d'entrée (40) peut être couplé à un premier arbre de sortie (41), et
un deuxième embrayage partiel (12) au moyen duquel l'arbre d'entrée (40) peut être couplé à un deuxième arbre de sortie (42), dans laquelle
le deuxième arbre de sortie (42) est réalisé sous la forme d'un arbre creux, dans lequel le deuxième arbre de sortie (42) présente une partie de bride (65) s'étendant dans la direction radiale (r), dans laquelle
le premier embrayage partiel (11) peut être actionné par une première unité d'actionnement (51) qui présente un dispositif d'entraînement (64) qui traverse la partie de bride (65) dans la direction axiale (x) et est relié de manière solidaire en rotation au deuxième arbre de sortie (42), et
le premier embrayage partiel (11) peut être piloté par l'intermédiaire d'un palier de débrayage (62) par le dispositif d'entraînement (64) dans la direction axiale (x), dans laquelle
le deuxième embrayage partiel (12) entoure le premier embrayage partiel (11) de manière coaxiale,
dans laquelle le premier embrayage partiel (11) est réalisé sous la forme d'un embrayage à disques, et le deuxième embrayage partiel (12) est réalisé sous la forme d'un embrayage à disques,
dans laquelle le premier embrayage partiel (11) présente un premier support de disques (71) sur lequel sont disposés les disques d'un paquet de disques associé et qui est relié au premier arbre de sortie (41), et dans laquelle des disques correspondants du paquet de disques associé sont disposés sur un support correspondant de l'arbre d'entrée (40), **caractérisée en ce que** le dispositif d'entraînement (64) peut être piloté par l'intermédiaire d'un premier palier de débrayage (61) dans la direction axiale (x), et le premier embrayage partiel (11) peut être piloté par l'intermédiaire d'un deuxième palier de débrayage (62) par le dispositif d'entraînement (64) dans la direction axiale (x), et **en ce que** les disques disposés sur le premier support de disques (71) sont orientés radialement vers l'extérieur, et les disques disposés sur le support correspondant de l'arbre d'entrée (40) qui y correspondent sont orientés radialement vers l'intérieur, et le raccordement entre le premier arbre de sortie (41) et le premier support de disques (71) n'est par traversé par le dispositif d'entraînement (64).

2. Boîte de vitesses à double embrayage (10) selon la revendication 1, **caractérisée** en ce
le dispositif d'entraînement (64) est coulissant par rapport à la partie de bride (65) dans la direction axiale (x).

3. Boîte de vitesses à double embrayage (10) selon l'une quelconque des revendications précédentes, **caractérisée en ce que**
la première unité d'actionnement (51) présente un premier plateau de pression (53) pour actionner le premier embrayage partiel (11) qui peut être piloté par le deuxième palier de débrayage (62).

4. Boîte de vitesses à double embrayage (10) selon la revendication 3, **caractérisée** en ce
le premier plateau de pression (53) est relié de manière solidaire en rotation au premier arbre de sortie (41).

5. Boîte de vitesses à double embrayage (10) selon la revendication 3, **caractérisée** en ce
le premier plateau de pression (53) est monté rotatif par rapport au premier arbre de sortie (41).

6. Boîte de vitesses à double embrayage (10) selon l'une quelconque des revendications précédentes, **caractérisée en ce que**
le premier arbre de sortie (41) est relié de manière solidaire en rotation à un premier pignon (21) qui s'engrène avec une première roue dentée (31), et **en ce que**
le deuxième arbre de sortie (42) est relié de manière solidaire en rotation à un deuxième pignon (22) qui s'engrène avec une deuxième roue dentée (32).

7. Boîte de vitesses à double embrayage (10) selon la revendication 6, **caractérisée** en ce
la première roue dentée (31) et la deuxième roue dentée (32) sont reliées de manière solidaire en rotation à un arbre de sortie (45) qui peut être relié de manière solidaire en rotation à un troisième pignon (23).

8. Unité d'entraînement (100) pour un véhicule électrique, comprenant
une boîte de vitesses à double embrayage (10) selon l'une quelconque des revendications précédentes et un moteur électrique (5) pour entraîner l'arbre d'entrée (40) de la boîte de vitesses à double embrayage (10).
